# EUROPÄISCHE PATENTSCHRIFT

(11) **EP 3 608 521 B1**
(45) Veröffentlichungstag und Bekanntmachung des Hinweises auf die Patenterteilung: **19.05.2021**
(21) Anmeldenummer: 19190700.5
(22) Anmeldetag: 08.08.2019
(51) Int. Cl.: F01N 3/20, F01N 3/28, F01N 13/16, F01N 13/00

(54) **STÜTZSTIFT UND KATALYSATOR**
SUPPORT PIN AND CATALYST
TIGE DE SOUTIEN ET CATALYSEUR

(30) Priorität: 08.08.2018 DE 102018213358
(43) Veröffentlichungstag der Anmeldung: 12.02.2020
(73) Patentinhaber: GEDECO AG, 3992 Bettmeralp (CH)
(72) Erfinder: Geissler, Benjamin, 3992 Bettmeralp (CH)
(74) Vertreter: Tergau & Walkenhorst Patentanwälte PartGmbB

(56) Entgegenhaltungen:
- DE-A1- 4 434 673
- DE-A1- 10 055 447
- DE-A1-102008 035 561
- DE-A1-102010 052 650
- DE-A1-102014 115 063
- DE-U1- 9 317 050
- JP-A- H06 165 941

## Beschreibung

Die Erfindung betrifft einen Stützstift nach dem Oberbegriff von Anspruch 1. Sie betrifft weiterhin einen Katalysator.

Der elektrisch heizbare Katalysator bietet die alternative Lösung in der modernen Abgasreinigung von Verbrennungsmotoren. Hierbei wird eine Heizscheibe vor dem Katalysatorelement platziert, um die Wirkungsweise des Katalysators bereits in der Startphase des Motors sicherzustellen. Bei heutigen modernen Fahrzeugen kommt diese Lösung zusätzlich bei den Funktionen "Segeln" und "Start Stopp" wirkungsvoll zum Einsatz. In Testaufbauten wurden bereits alle Grenzwerte der Euro 6d unterboten. Unsere nachfolgend beschriebene Lösung ist die Halterung dieser Heizscheibe vor dem Katalysatorelement im Katalysatorgehäuse. Hierbei sind die elektrische Isolation, die Haltekraft und die Beständigkeit gegenüber Wasser, Kraftstoff und AdBlue entscheidend.

Die derzeit eingesetzten Heizleiterabstützungen werden aus einer Heizleitung hergestellt. Diese Leitung besteht aus einem Innendraht aus Stahl sowie einem Außenmantel aus Stahl und einer Isolator Schicht zwischen den beiden elektrisch leitenden Stahlteilen. Die Isolator Schicht besteht aus gebrochener und erneut verfestigter Keramik. Der Außenmantel wird teilweise mechanisch abgedreht, die gebrochene Keramik fällt in diesem Teilbereich ab und der Innenleiter ist somit freigelegt.

Aus der EP 2 791 482 B1 ist ein Stützstift für einen elektrisch beheizbaren Wabenkörper bekannt. Dieser weist einen Kern aus keramischem, elektrisch nicht leitfähigem Material auf.

Aus der DE 10 2008 035 561 A1 sind Stützelemente zur Anordnung in einem elektrisch beheizbaren Wabenkörper bekannt, welche in Hülsen unter Zwischenschaltung einer elektrischen Isolierung angeordnet sind.

Als weiterer Stand der Technik wird auf DE 100 55 447 A1 und die DE 44 34 673 A1 hingewiesen.

Die Einsatzbedingungen im Katalysator sind hohe Temperaturunterschiede, Vibrationen, aber auch hohe Schwankungen der Feuchtigkeit infolge von Kondenswasser und nicht verbranntem Kraftstoff sowie zugeführtem AdBlue. Da die derzeitig eingesetzte Keramikschicht von beiden Seiten zugängig ist, dringt Feuchtigkeit ungehindert ein. Bei schnell ansteigender Hitze (Temperatur), welche durch die integrierte Heizung bei jedem Start entsteht, wird die eingedrungene Feuchtigkeit verdampft, in der daraus resultierenden Volumenausdehnung werden kleinste Partikel der verbliebenen Isolatorschicht herausgelöst. Nach kurzer Zeit ist die derzeit eingesetzte Keramikschicht soweit zerstört, dass die elektrische Isolation zwangsläufig nicht mehr gegeben ist und es zu einem Kurzschluss kommt. Dadurch ist die Funktion der Heizung im Dauerbetrieb nicht mehr gewährleistet.

Der Erfindung liegt daher die Aufgabe zugrunde, einen Stützstift dahingehend zu verbessern, dass ein sicherer Einsatz im Dauerbetrieb gewährleistet wird. Weiterhin soll ein Katalysator bereitgestellt werden, der sichere Einsätze im Dauerbetrieb ermöglicht.

In Bezug auf den Stützstift wird diese Aufgabe erfindungsgemäß gelöst mit einem Stützstift mit den Merlkmalen des Anspruchs 1.

Vorteilhafte Ausgestaltungen der Erfindung sind Gegenstand der Unteransprüche und der Beschreibung.

Die Erfindung geht von der Überlegung aus, dass ein Stützstift im Einsatz in einem Katalysator vielfältigen Belastungen ausgesetzt ist und verschiedene Anforderungen gleichzeitig erfüllen muss. Der Heizkörper muss zuverlässig vor dem Wabenkörper des Katalysators gehalten werden, diese Halterung muss im Dauerbetrieb zuverlässig funktionieren. Gleichzeitig müssen die für diese Halterung verwendeten Stützstifte den Hitzebedingungen dauerhaft standhalten, und Einflüssen wie Feuchtigkeit und AdBlue standhalten. Darüber hinaus müssen sie eine zuverlässige elektrische Isolierung des Heizkörpers von dem Trägerkörper des Katalysators bereitstellen.

Wie nunmehr erkannt wurde, lässt sich ein zuverlässiger Einsatz der Stützstifte erreichen, indem der jeweilige Stützstift eine Außenhülse und einen Stiftkörper umfasst, wobei die beiden Teile durch eine elektrisch nicht-leitfähige Innenhülse, die den Stiftkörper innerhalb der Außenhülse umgibt, voneinander elektrisch isoliert werden. Auf diese Weise kann eine gegenüber den speziellen Bedingungen im Katalysator robuste Ausführung eines Stützstiftes bereitgestellt werden, mit der ein Kurzschluss ausgeschlossen werden kann.

Der Begriff "elektrisch nicht leitend" korrespondiert bevorzugt zu einer elektrischen Leitfähigkeit von weniger als 10-8 S·cm-1.

Die Außenhülse und/oder der Stiftkörper sind vorteilhafterweise aus lötbarem und/oder schweißbarem Material hergestellt. Die Lötbarkeit erlaubt das Verlöten der Außenhülse mit dem Heizkörper und des Stiftkörpers mit dem Trägerkörper des Katalysators. Außenhülse und Stiftkörper sind somit bevorzugt jeweils aus elektrisch leitfähigen bzw. elektrisch leitendem Material hergestellt. In ähnlicher Weise können die beiden Komponenten mit Heizkörper/Trägerkörper verschweißt werden.

Vorteilhafterweise ist das Material der Innenhülse hitzebeständig und/oder säurebeständig. Der Begriff "hitzebeständig" umfasst bevorzugt eine Hitzebeständigkeit bei Temperaturen größer oder gleich 600 °C. Die Säurebeständigkeit bezieht sich bevorzugt auf die im Katalysator auftretenden Säuren im jeweiligen Kraftstoff (Benzin/Diesel) sowie AdBlue.

Bevorzugt ist das Material der Innenhülse ein Keramik-Werkstoff, insbesondere Aluminiumoxid. Dieses Material nimmt keine Feuchtigkeit auf und ist beständig gegenüber AdBlue und jeglichem Kraftstoff.

Der Stützstift ist geeignet, in Katalysatoren von Diesel- als auch Benzinmotoren bzw. Otto-Motoren eingesetzt zu werden.

Die Außenhülse ist bevorzugt zumindest bereichsweise radialsymmetrisch ausgebildet, wobei der Stiftkörper mittig innerhalb der Außenhülse angeordnet ist.

Die Außenhülse weist bevorzugt ein offenes und ein geschlossenes Ende auf, wobei der Stiftkörper axial am offenen Ende aus der Außenhülse hinausragt. Das geschlossene Ende ist dabei im verbauten Zustand dem Heizkörper zugewandt bzw. an ihm befestigt, insbesondere verlötet. Eine auf dieser Seite geschlossene Außenhülse hat den Vorteil, dass Komponenten im Inneren der Außenhülse, insbesondere die Innenhülse, vor äußeren Einflüssen im Katalysator, insbesondere AdBlue, geschützt werden.

Die Außenhülse weist bevorzugt ein erstes offenes Ende auf und ein zweites offenes Ende auf, wobei der Stiftkörper axial am zweiten offenen Ende aus der Außenhülse herausragt. Die Ausführung mit zwei offenen Enden ist fertigungstechnisch einfacher und günstiger. Sie kann insbesondere dann eingesetzt werden, wenn das Material der Innenhülse AdBlue-beständig ist.

Die Außenhülse weist bevorzugt am offenen Ende, an dem der Stiftkörper aus der Außenhülse hinausragt, einen ringförmigen Endbereich auf, der die Innenhülse in axialer Richtung blockiert bzw. die Bewegung der Innenhülse in axialer Richtung hindert. Der ringförmige Endbereich ist bevorzugt realisiert durch ein Umbördeln der Außenhülse in diesem Bereich. Der ringförmige Endbereich umfasst bevorzugt einen ringförmigen Bereich, der senkrecht auf dem im Wesentlichen zylindrischen Teil der Außenhülse steht. Die Fläche dieses ringförmigen Bereiches verhindert auf diese Weise eine Bewegung der Innenhülse in Richtung des offenen Endes der Außenhülse, an dem der Stiftkörper hinausragt.

In axialer Richtung ist vorteilhafterweise zwischen erstem offenen Ende der Außenhülse und Stiftkörper ein Isolierelement aus elektrisch nicht-leitfähigen Material angeordnet. Auf diese Weise wird die isolierende Wirkung zwischen Außenhülse und dem in ihr teilweise angeordneten Stiftkörper verstärkt. Das Isolierelement ist bevorzugt aus hitzebeständigem Material gefertigt.

Das Isolierelement ist bevorzugt scheibenförmig oder kugelförmig oder zylinderförmig ausgebildet.

Zwischen einem ersten offenen Ende der Außenhülse und dem Isolierelement ist bevorzugt in axialer Richtung ein Schutzelement angeordnet. Das Schutzelement dient dem Schutz des Isolierelementes bei der Herstellung des Stützstiftes. Die Außenhülse wird bevorzugt zunächst in zylindrischer Form bereitgestellt. Nach Einführung von Stift, Innenhülse und Isolierelement wird sie an beiden Seiten durch einen Bördelprozess umgebogen, so dass die inneren Komponenten an einer axialen Bewegung gehindert werden.

Um nun beim Umbiegen eine Beschädigung des Isolierelementes zu vermeiden, ist das Schutzelement vorgesehen. Die Knickstelle der Außenhülse grenzt auf diese Weise an das Schutzelement an und nicht an das Isolierelement.

Der Stiftkörper weist erfindungsgemäß einen Verdickungsbereich auf, in dem der Stiftkörper einen Querschnitt aufweist, der größer ist als ein Innenquerschnitt der Innenhülse, wobei die Innenhülse in axialer Richtung zwischen diesem Verdickungsbereich und einem Ende der Außenhülse, an dem der Stiftkörper aus der Außenhülse herausragt, angeordnet ist. Mit anderen Worten der Stiftkörper weist in diesem Verdickungsbereich einen Radius auf, der größer ist als der Radius der benachbarten Innenhülse. Insbesondere in Kombination mit dem oben beschriebenen ringförmigen Endbereich führt diese Ausführungsform zur Kompensation von Zugkräften bzw. Auszugkräften. Die Innenhülse wird durch den Endbereich an einer axialen Bewegung gehindert, und die Innenhülse hindert aufgrund des Verdickungsbereiches den Stiftkörper an einer axialen Bewegung in diese Richtung. Zwischen dem Verdickungsbereich und der Innenseite der Außenhülse ist in einer bevorzugten Ausführungsform ein Klebstoff, der in einer bevorzugten Ausführungsform unten beschrieben wird, angebracht, der die Außenhülse und den Stiftkörper miteinander verklebt. Auf diese Weise wird eine Verdrehsicherung erzielt, d. h. der Stiftkörper kann in Bezug auf die Außenhülse nicht rotieren. Damit wird verhindert, dass aufgrund von Vibrationen von Wabenkörper bzw. Heizkörper eine Lockerung des Heizkörpers erfolgt, was zu Materialschäden und einer unzureichenden Heizung des Trägerkörpers bzw. Wabenkörpers führen kann.

Der Stiftkörper weist an seinem der Innenseite der Außenhülse zugewandten Ende vorteilhafterweise einen radial vergrößerten Bereich, insbesondere einen Kragen/Sockel, auf. Der Kragen stützt sich in axialer Richtung an der Innenhülse und an der entgegengesetzten Seite an dem Isolierelement bzw., sofern kein Isolierelement vorhanden ist, innen an der Außenhülse ab. Der Krage entspricht bevorzugt einem oben beschriebenen Verdickungsbereich, der an einem Ende des Stiftkörpers angeordnet ist. In einer ersten bevorzugten Ausführungsform wird der Stiftkörper aus einen Metallstück mit größerem Durchmesser gedreht. Der Kragen/Sockel und der übrige Teil des Stiftkörpers sind dann einstückig aufgebaut bzw. sind ein Stück Metall, insbesondere aus dem Material 2.4869 (NiCr8020). In einer zweiten bevorzugten Ausführungsform ist der Sockel ein separates Teil, welches an das im Wesentlichen zylindrische Teil des Stiftkörpers angeschlagen wird bzw. durch Verformung an diesem Teil befestigt wird, insbesondere durch eine Pressvorrichtung.

In einer bevorzugten Ausführungsform sind zwei voneinander beabstandete Innenhülsen vorgesehen. Vorteilhafterweise ist der Verdickungsbereich zwischen den beiden Innenhülsen angeordnet.

Der Stiftkörper weist bevorzugt in axialer Richtung zwischen den beiden Innenhülsen zumindest bereichsweise eine Rändelung auf. Die Rändelung dient dabei jeweils als Anschlag für die Innenhülse. Dabei werden die beiden Innenhülsen von entgegengesetzten des Stiftkörpers auf diesen aufgeschoben.

Vorteilhafterweise ist jeweils axial in dem Bereich zwischen einer Innenhülse und der Rändelung jeweils ein Ring, beispielsweise aus elektrisch leitfähigem Material, angeordnet. Diese Ringe können die Gefahr des Verrutschens des Stiftköpers in der Außenhülse verringern bzw. den Widerstand gegen Abzugskräfte vergrößern.

Der Stiftkörper verjüngt sich bevorzugt an seinem Ende, welches aus der Außenhülse herausragt, zumindest bereichsweise, insbesondere konisch.

In Bezug auf den Katalysator wird die oben genannte Aufgabe erfindungsgemäß gelöst mit einem Katalysator mit den Merkmalen des Anspruchs 15.

Sowohl Heizkörper als auch Trägerkörper können als Wabenkörper ausgebildet sein. Die Außenhülse des Stützstiftes kann dabei insbesondere mittels einer Lötverbindung mit dem Heizkörper verbunden werden. Der Heizkörper ist bevorzugt als Heizscheibe ausgebildet. Der Stift wird bevorzugt mittels einer Lötverbindung mit dem Trägerkörper verbunden. Bevorzugt erfolgt die Befestigung des Heizkörpers am Trägerkörper nur mittels einer Vielzahl von Stützstiften und ohne weitere Befestigungselemente. Beispielhaft können dazu zwischen 50 und 150 Stützstifte verwendet werden.

Die Vorteile der Erfindung liegen insbesondere darin, dass durch die Bereitstellung eines Stützstiftes, der durch seine Bauweise eine sehr lange Lebensdauer hat, sichergestellt werden kann, dass die Funktion des Katalysators nicht zurückgeht. So kann ein dauerhafter niedriger Schadstoffausstoß gewährleistet werden. Der Stützstift kann seine Funktion während der gesamten Lebensdauer des Katalysators ausüben. Durch eine Verwendung von Aluminiumoxid als Material für die Innenhülse(n) wird eine kostengünstige Lösung einer beidseitig offenen Aluminiumhülse ermöglicht.

Ein Ausführungsbeispiel der Erfindung wird anhand einer Zeichnung näher erläutert. Darin zeigen in stark schematisierter Darstellung:
- FIG. 1: einen Stützstift in einer ersten bevorzugten Ausführungsform;
- FIG. 2: einen Stützstift in einer zweiten bevorzugten Ausführungsform;
- FIG. 3: einen Stützstift in einer dritten bevorzugten Ausführungsform;
- FIG. 4: einen Stützstift in einer vierten bevorzugten Ausführungsform;
- FIG. 5: einen Stützstift in einer fünften bevorzugten Ausführungsform;
- FIG. 6: einen Stützstift in einer sechsten bevorzugten Ausführungsform;
- FIG. 7: einen Stützstift in einer siebten bevorzugten Ausführungsform;
- FIG. 8: einen Stützstift in einer achten bevorzugten Ausführungsform;
- FIG. 9: einen Stützstift in einer neunten bevorzugten Ausführungsform;
- FIG. 10: einen Stützstift in einer zehnten bevorzugten Ausführungsform;
- FIG. 11: einen Stützstift in einer elften bevorzugten Ausführungsform;
- FIG. 12: einen Katalysator mit einem Heizkörper und einem Wabenkörper sowie einer Anordnung von Stützstiften;
- FIG. 13: eine Heizscheibe mit daran befestigten Stützstiften;
- FIG. 14: einen Stützstift in einer weiteren bevorzugten Ausführungsform; und
- FIG. 15: einen Stützstift in einer weiteren bevorzugten Ausführungsform.

Gleiche Teile sind in allen Figuren mit denselben Bezugszeichen versehen.

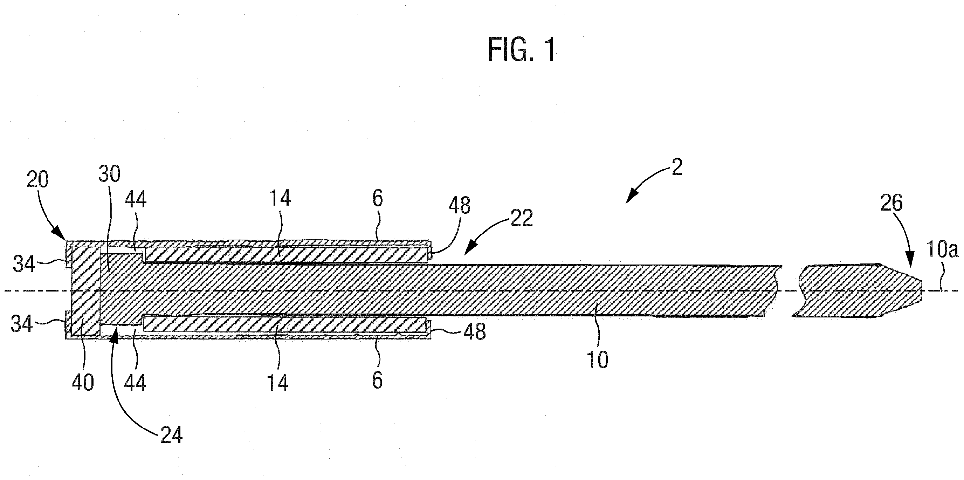

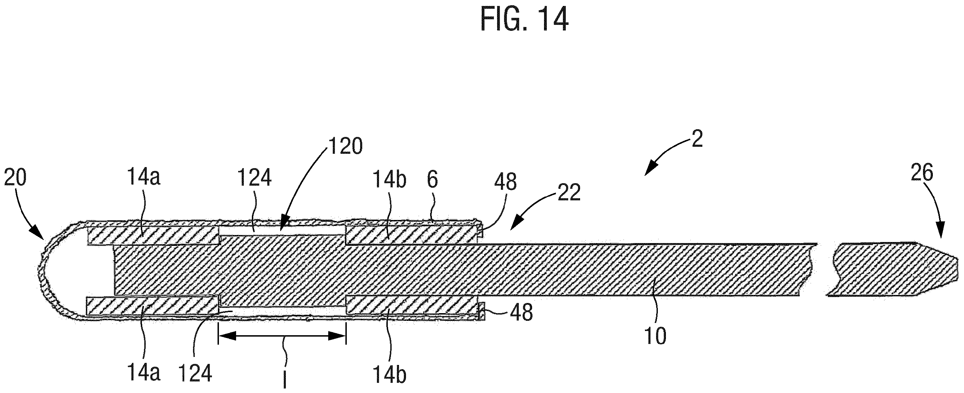

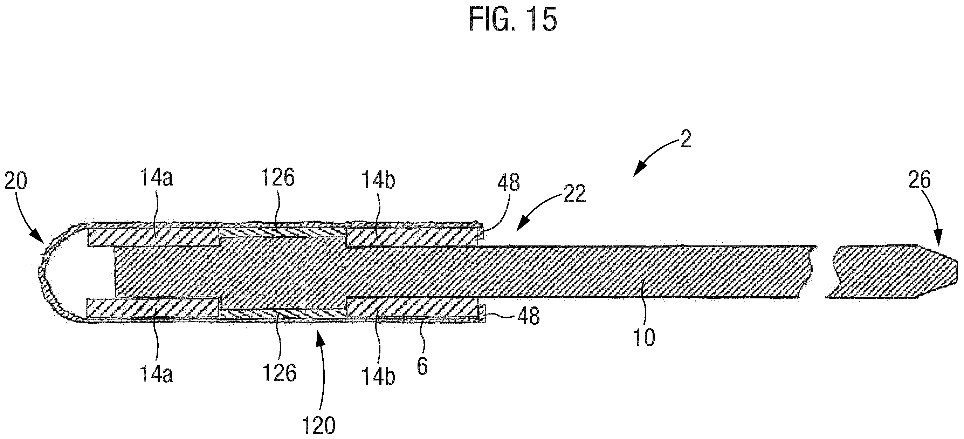

Ein in FIG. 1 in einem Längsschnitt dargestellter Stützstift 2 umfasst eine, im Wesentlichen zylindrisch ausgebildete, Außenhülse 6 und einen Stiftkörper 10, der in die Außenhülse 6 eingesteckt ist. Innerhalb der Außenhülse 6 ist der Stiftkörper 10 bereichsweise von einer Innenhülse 14 umgeben. Die Außenhülse 6 hat ein erstes Ende 20 und ein zweites Ende 22, an dem der Stiftkörper 10 aus der Außenhülse 6 herausragt. Der Stiftkörper 10, der im Wesentlichen eine zylindrische Form aufweist bzw. im Wesentlichen, d. h. über einen Großteil seiner Länge, radialsymmetrisch ausgebildet ist, weist an einem ersten Ende 24, welches innerhalb der Außenhülse 6 angeordnet ist, einen Kragen bzw. Sockel 30 auf, der als radial vergrößerter Endbereich des Stiftkörpers 10 gebildet ist und bevorzugt in zylindrischer Form ausgebildet ist. An einem zweiten Ende 26 verjüngt sich der Stiftkörper 10, bevorzugt konisch. Der Sockel 30 ist ein Spezialfall eines im Zusammenhang mit den FIG. 14 und 15 beschriebenen Verdickungsbereiches 120 des Stiftkörpers 10.

Die Außenhülse 6 und der Stiftkörper 10 sind jeweils lötbarem bzw. lötfähigem Material bzw. aus elektrisch leitfähigem bzw. elektrisch leitendem Material gefertigt. Beispielhaft ist der Stiftkörper 10 aus dem Material 2.4869 (NiCr8020) gefertigt. Die Außenhülse 6 ist beispielgemäß aus 2.4816 (Inconel 600) gefertigt bzw. aus NiCr15Fe.

In einem Katalysator wird bevorzugt die Außenhülse 6 mit einem Heizkörper, insbesondere einer Heizscheibe, verbunden und das Ende 26 des Stützstiftes mit einem Katalysatorelement bzw. Trägerkörper, insbesondere Wabenkörper, des Katalysators. In beiden Komponenten (Trägerkörper und Heizkörper) fließt während des Betriebs des Katalysators ein elektrischer Strom, es ist daher äußerst wichtig, einen Kurzschluss zwischen diesen beiden Komponenten zu vermeiden. Deshalb müssen Außenhülse 6 und Stiftkörper 10 voneinander elektrisch zuverlässig isoliert werden. Erfindungsgemäß ist dazu eine Innenhülse 14 vorgesehen, die den Stiftkörper 10 innerhalb der Außenhülse 6 bereichsweise, d. h. über eine gewisse Länge in axialer Richtung des Stiftkörpers 10, umgibt. Von einer Mittelachse 10a des Stiftkörpers 10 radial nach außen gesehen liegt die Innenhülse 14 somit in radialer Richtung zwischen Stiftkörper 10 und Außenhülse 6. An dem zweiten Ende 22 weist die Außenhülse 6 einen ringförmigen Endbereich 48 auf.

Die Innenhülse 14 ist aus elektrisch nicht-leitfähigem bzw. elektrisch nicht-leitendem, hitzebeständigen und säurebeständigem Material gefertigt. Sie ist bevorzugt aus Aluminiumoxid (Al₂O₃) gefertigt.

Zwischen dem Sockel 30 und einem ringförmigen Endbereich 34 der Außenhülse 6 ist innerhalb der Außenhülse 6 ein zylinderförmiges bzw. scheibenförmiges Isolierelement 40 angeordnet, welches zur elektrischen Isolierung von Außenhülse 6 und Stiftkörper 10 dient. Das Isolierelement 40 ist aus elektrisch nicht-leitfähigem bzw. elektrisch nicht-leitendem und hitzebeständigem Material gefertigt. Das Material der Innenhülse 14 und/oder das Material des Isolierelementes 40 ist bevorzugt ein Dielektrikum. Geeignete Materialien sind beispielsweise 1.4122 (X39CrMo17-1) oder 1.4113 (X6CrMo17-1).

Zwischen Sockel 30 und Aluminiumhülse 6 ist ein ringförmiger Spalt 44 gebildet. Der Abstand zwischen jeweils elektrisch leitenden Komponenten wird dabei so groß gewählt, dass ein Isolationswert von mehr als 20 MΩ realisiert wird.

Der Stiftkörper 10 hat bevorzugt eine Länge zwischen 34 und 36 mm, insbesondere 35 mm und einen Durchmesser zwischen 1,1 und 1,3 mm, insbesondere 1,2 mm. Die Außenhülse 6 hat bevorzugt einen Durchmesser zwischen 2,3 und 2,5 mm, insbesondere 2,4 mm. Dies sind vorteilhafte Beispielmaße für alle dargestellten Ausführungsformen. Die Außenhülse 6 hat bevorzugt eine Länge, die zwischen einem Viertel und einem Drittel der Länge des Stiftkörpers 10 liegt.

Der Stützstift 2 wird bevorzugt folgendermaßen zusammengebaut. Die Außenhülse 6 wird in zylindrischer Form bereitgestellt. Die Innenhülse 14 wird auf den Stiftkörper 10 geschoben. Die Außenhülse 6 wird nun im Bereich des zweiten Endes 22 randseitig umgebördelt, so dass der ringförmige Endbereich 48 entsteht. Das Isolierelement 40 wird nun am Ende 20 der Außenhülse 6 in die Außenhülse hineingeschoben, bis es am Sockel 30 anliegt. Nun wird die Außenhülse 6 im Endbereich 20 randseitig umgebördelt, so dass der ringförmige Randbereich 34 entsteht.

Aufgrund der ringförmigen Endbereiche 34, 48 werden Isolierelement 40, Stiftkörper 10 und Innenhülse 14 an einer axialen Bewegung gehindert. Die Absorption von Kräften in axialer Richtung ist äußerst wichtig, um eine hohe Lebensdauer des Stützstiftes zu gewährleisten, so dass auch eine einwandfreie Funktonalität des Katalysators gewährleistet werden kann.

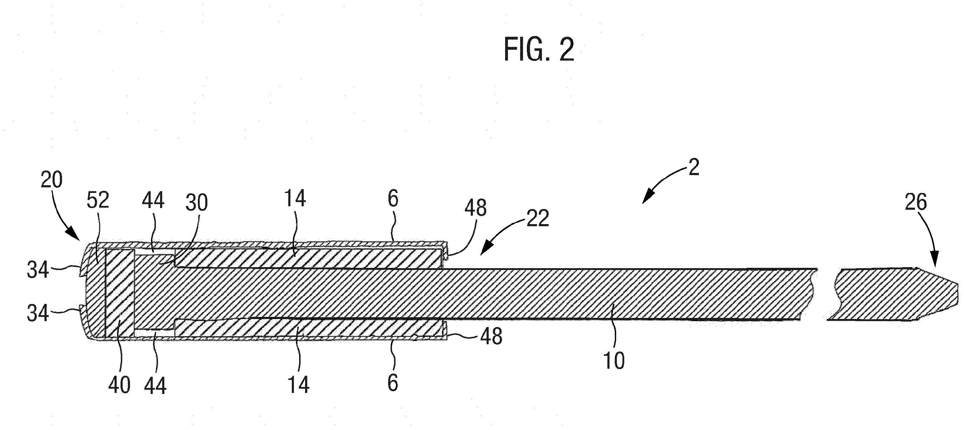

Ein Stützstift 2 in einer zweiten bevorzugten Ausführungsform ist in FIG. 2 dargestellt. Diese Ausführungsform unterscheidet sich von der in FIG. 1 dargestellten Ausführungsform dadurch, dass am Ende 20 der Außenhülse 6 in der Außenhülse zwischen Endbereich 34 und Isolierelement 40 ein Schutzelement 52,welches aus hitzebeständigem Material besteht (größer gleich 600°C), angeordnet ist. Das Schutzelement 52 dient dazu, das Isolierelement 40 während des Umbördelns der Außenhülse 6 im Endbereich 20 vor Beschädigungen zu schützen. Das Schutzelement 52 ist beispielhaft aus dem Material 2.4816 (Inconel 600) gefertigt. Das Schutzelement 52 ist an seinem dem Isolierelement 40 abgewandten Ende konvex ausgebildet.

Die beiden in den FIG. 1 und 2 dargestellten Ausführungen weisen einen offenen Endbereich 20 der Außenhülse 6 auf, was materialtechnisch gegenüber einem geschlossenen Bereich günstiger und einfacher in der Herstellung ist. Diese Ausführung ist bevorzugt, sofern das Material der Innenhülse 14 gegenüber Umgebungseinflüssen im Katalysator, insbesondere AdBlue, resistent bzw. unempfindlich ist.

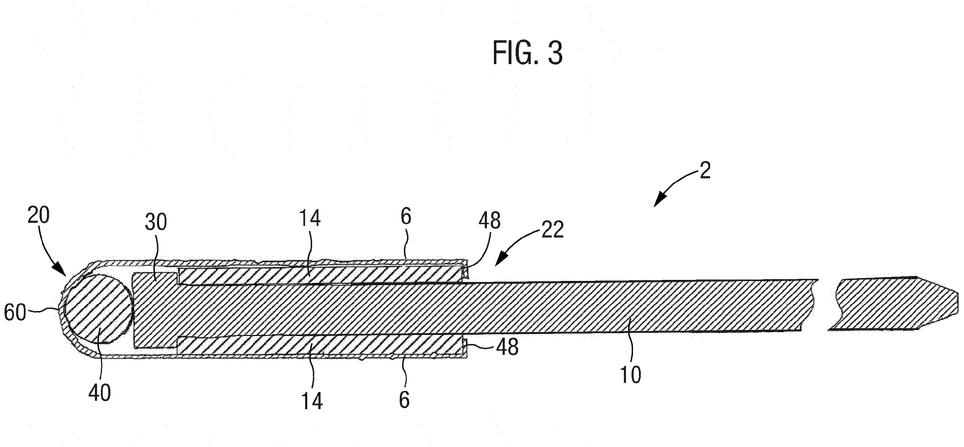

In FIG. 3 ist eine weitere bevorzugte Ausführungsform eines Stützstiftes 2 dargestellt. Diese Ausführung unterscheidet sich von der in FIG. 1 dargestellten Ausführung dadurch, dass die Außenhülse 6 in ihrem Endbereich 20 einen abgerundeten bzw. konvexen und geschlossenen Endbereich 60 aufweist. Da die Außenhülse 6 in diesem Bereich geschlossen ist, wird die Innenhülse 14 vor Umgebungseinflüssen wie beispielsweise AdBlue geschützt. Das Isolierelement 40 ist vorliegend kugelförmig ausgebildet mit einer Außenkrümmung, die der Innenkrümmung des Endbereiches 60 entspricht. Auf diese Weise wird eine stabile Lagerung des Isolierelementes 40 ermöglicht.

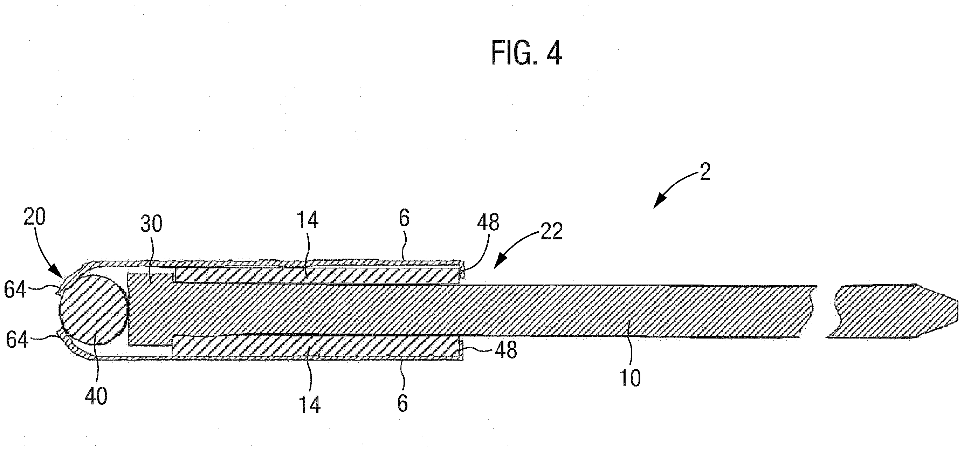

Die in FIG. 4 weitere bevorzugte Ausführungsform eines Stützstiftes 2 unterscheidet sich von der in FIG. 3 dargestellten Ausführung dadurch, dass die Außenhülse 6 im Endbereich 20 einen konvexen, offen Endbereich 64 aufweist, wodurch die Herstellung gegenüber der in FIG. 3 dargestellten Version vereinfacht wird. Die einseitig geschlossene Ausführung der Außenhülse 6 muss zu ihrer Herstellung mechanisch bzw. zerspanend bearbeitet werden als Tiefziehteil oder als Hülse, die gebohrt wird. Bei der offenen Ausführung der Außenhülse 6 kann zu ihrer Herstellung ein Rohr benutzt werden, welches abgelängt wird, so dass diese Ausführung kostengünstiger in der Herstellung ist.

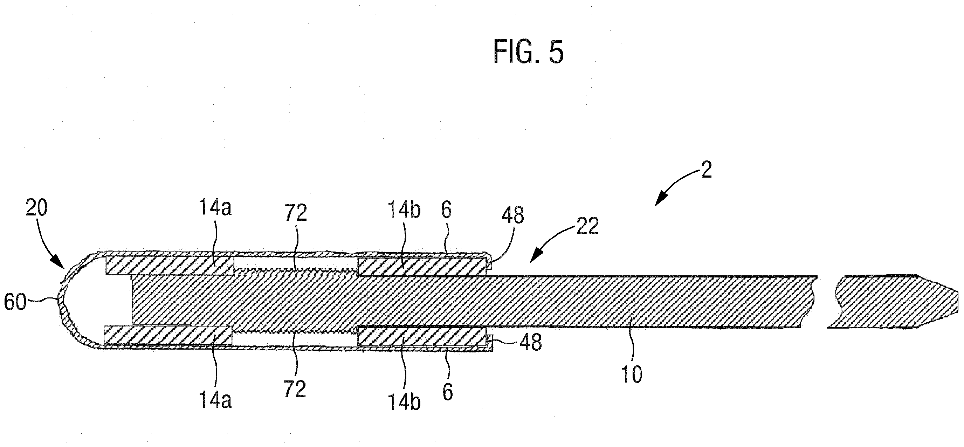

In FIG. 5 ist eine weitere bevorzugte Ausführungsform eines Stützstiftes 2 dargestellt, welche eine Außenhülse 6 mit einem geschlossenen abgerundeten Endbereich 60 aufweist. Im Unterschied zu den in den vorherigen Figuren dargestellten Ausführungsformen sind zwei Innenhülsen 14a, 14b vorgesehen, welche den Stiftkörper 10 innerhalb der Außenhülse 6 hülsenartig umgeben. Als Material der Innenhülsen 14a, 14b kommen bevorzugt die oben im Zusammenhang mit einer einzelnen Innenhülse 14 beschriebenen Materialien in Frage.

Der Stiftkörper 10 weist keinen Sockel 30, sondern eine Rändelung 72 auf, welche jeweils einen Anschlag für eine Innenhülse 14a, 14b bildet. Zur Herstellung des Stützstiftes 2 wird jeweils von einer Seite (von links und von rechts) die Innenhülse 14a, 14b auf den Stiftkörper 10 geschoben, bis die Innenhülse 14a, 14b an die Rändelung stößt. Der Stiftkörper 10 mit den montierten Innenhülsen 14a, 14b wird in die Außenhülse 6 bis auf Anschlag eingeführt. Je nach offener oder geschlossener Ausführung der Außenhülse 6 wird diese dann an der jeweils offenen Seite umgebördelt.

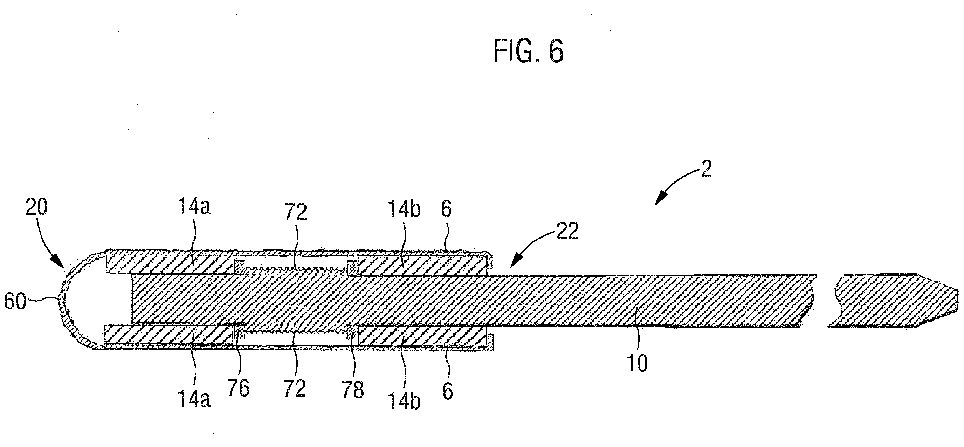

In FIG. 6 ist eine weitere bevorzugte Ausführungsform eines Stützstiftes 2 dargestellt. Diese unterscheidet sich von der in FIG. 5 dargestellten Ausführungsform dadurch, dass die Rändelung 72 in axialer Richtung eine geringere Ausdehnung aufweist. An beiden Rändern der Rändelung 72 sind Ringe 76, 78 aus elektrisch leitendem Material angeordnet, die insbesondere aus 2.4816 (Inconel 600) hergestellt sind. Die Ringe 76, 78 verbessern die Stabilität des Stützstiftes 2 gegenüber Abzugskräften bzw. gegenüber dem Verrutschen von Stiftkörper 10 gegenüber Außenhülse 6. Sie verhindern weiterhin eine Beschädigung der Innenhülsen 14a, 14b durch die Rändelung 72. Die Ringe 76, 78 dienen als Schutz für das Keramikmaterial der jeweiligen Innenhülse, da die Keramik sehr spröde ist. Beim Rändeln entsteht immer eine kleine Fase am Anfang und Ende. Damit kann das Rändel nicht plan an der Fläche der Keramik anliegen und beschädigt/zerstört diese sehr einfach beim Testen der Ausziehkräfte, da hier die Kraft an nur einer kleinen Fläche der Keramik anliegt. Durch die Ringe 76, 78 wird diese Kraft besser verteilt.

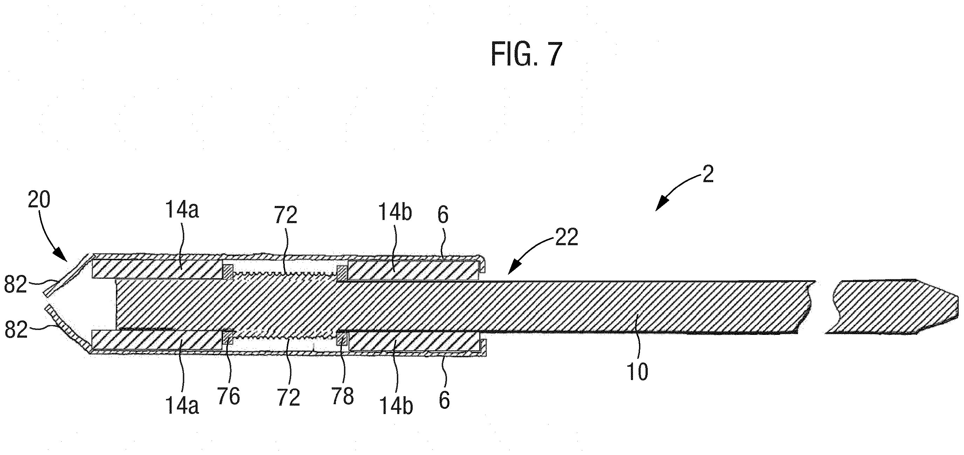

In FIG. 7 ist eine weitere bevorzugte Ausführungsform eines Stützstiftes 2 dargestellt. Diese Variante unterscheidet sich von der in der FIG. 6 dargestellten Ausführung dadurch, dass die Außenhülse 6 im Endbereich 20 offen ausgebildet ist. Ein Endbereich 82 der Außenhülse 6 ist umgeknickt bzw. umgebördelt, wobei dieser Bereich 82 einen Winkel von weniger als 90° zum zylinderförmigen Teil der Außenhülse 6 aufweist.

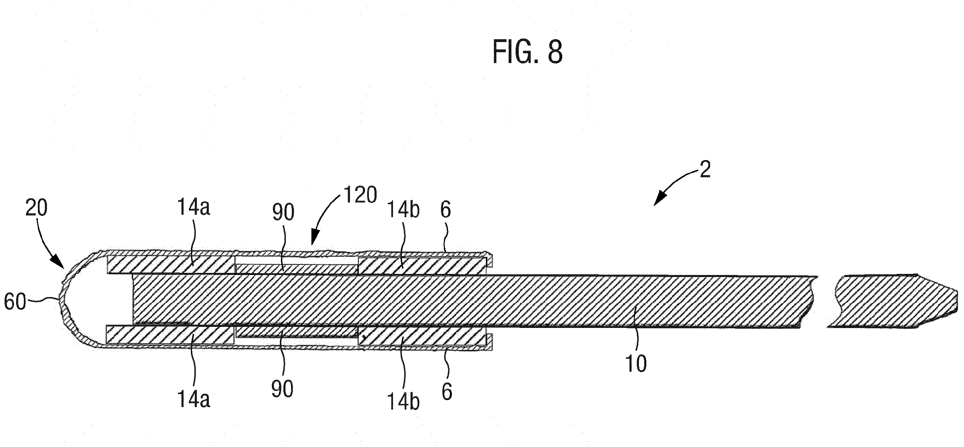

Eine weitere bevorzugte Ausführungsform eines Stützstiftes 2 ist in FIG. 8 dargestellt. Die Außenhülse 6 in diesem Beispiel weist einen geschlossenen, konvexen und abgerundeten Endbereich 60 auf. Der Stiftkörper 10 weist keine Rändelung 72 auf. Zur Beabstandung der zwei Innenhülsen 14a, 14b, ist in axialer Richtung zwischen ihnen eine Zwischenhülse 90 angeordnet, welche mit dem Pin bzw. Stiftkörper 10 laserverschweißt ist und die aus elektrisch leitendem Material, insbesondere 2.4816 (Inconel 600), gefertigt ist. Die Zwischenhülse 90 bildet auf diese Weise einen Verdickungsbereich 120, wie er weiter unten beschrieben ist. Dies ermöglicht in besonders zuverlässiger Weise eine Beabstandung der Innenhülsen14a, 14b und verhindert ein axiales Verrutschen von Stiftkörper 10, Außenhülse 6 und Innenhülsen 14a, 14b gegeneinander.

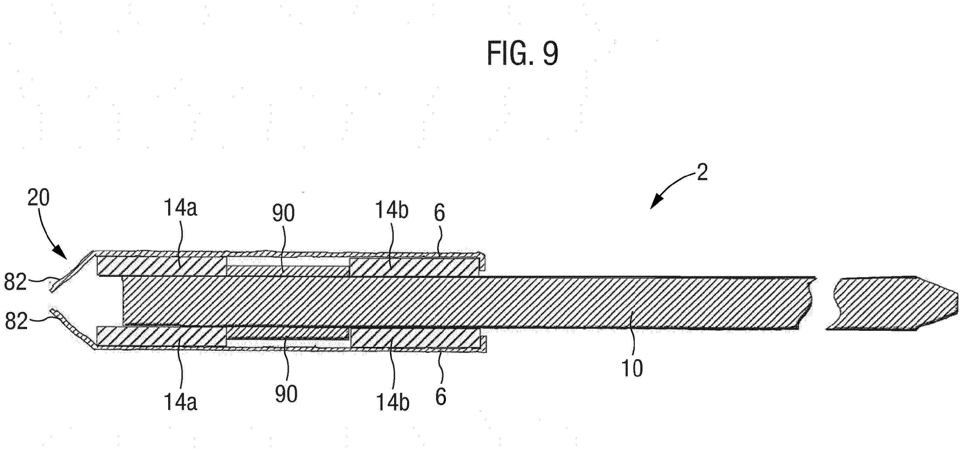

Die in FIG. 9 dargestellte bevorzugte Variante eines Stützstiftes 2 unterscheidet sich von der in FIG. 8 dargestellten Ausführungsform durch einen offenen Endbereich 82.

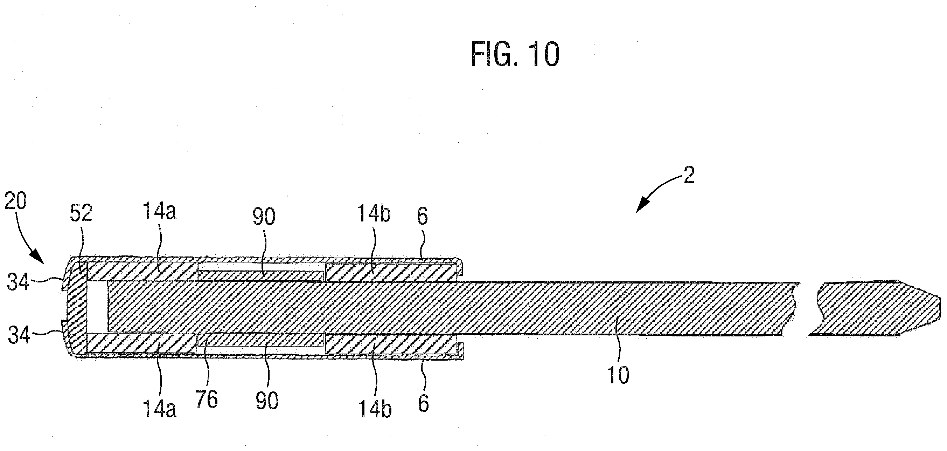

Die in FIG. 10 dargestellte bevorzugte Ausführungsform eines Stützstiftes 2 unterscheidet sich von der in FIG. 9 dargestellten Variante durch ein am Ende 20 innerhalb der Außenhülse 6 angeordnetes Schutzelement 52 (vgl. FIG. 2). Das Schutzelement 52 schützt das Material der Innenhülse 14a beim Herstellungsprozess während des Umbördelns des Endbereiches 34 der Außenhülse 6.

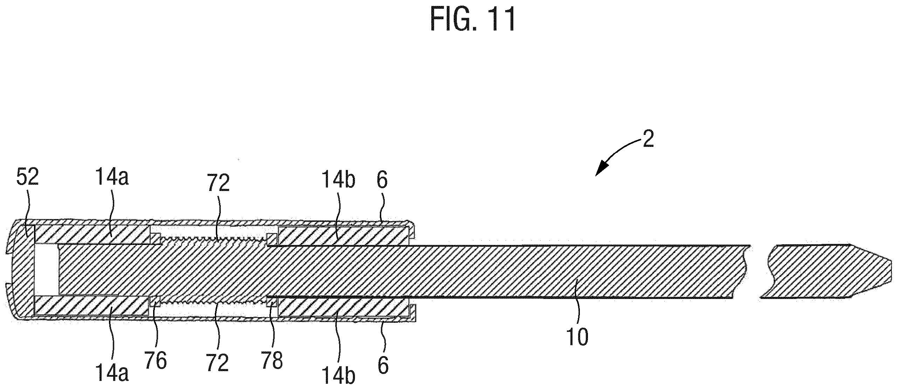

Eine weitere bevorzugte Ausführungsform des Stützstiftes 2 ist in FIG. 11 dargestellt. Diese Variante unterscheidet sich von der in FIG. 10 dargestellten bevorzugten Variante dadurch, dass die Beabstandung der beiden Innenhülsen14a, 14b wie bei der in FIG. 7 dargestellten Ausführung mittels einer Rändelung 72 und zwei Ringen 76, 78 erfolgt.

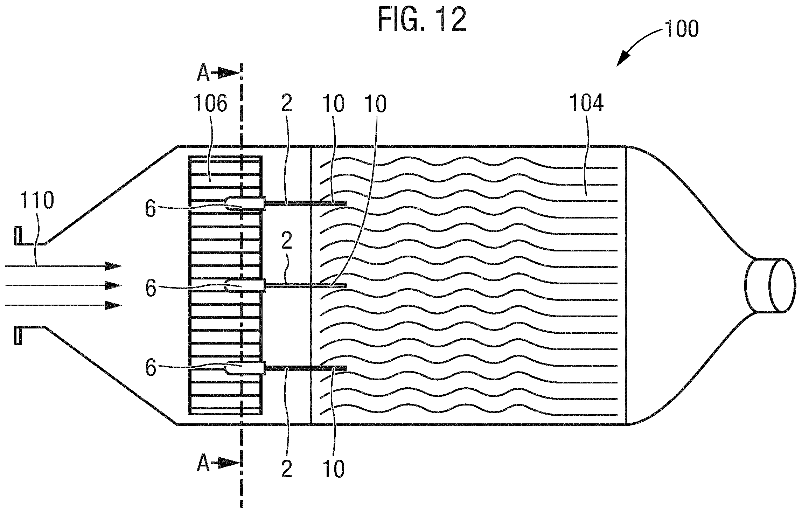

In FIG. 12 ist schematisch ein Katalysator 100 dargestellt. Dieser weist einen Trägerkörper 104 auf, der bevorzugt als Wabenkörper ausgebildet sowie einen Heizkörper 106, der ebenfalls eine wabenartige Struktur aufweisen kann. Der Heizkörper 106 ist als Heizleiter bzw. als Heizscheibe gebildet. Durch den Heizkörper 106, den ein Abgasstrom 110 zuerst trifft und der für eine zusätzliche Heizung des Trägerkörpers dient, wird die Effizienz des Katalysators deutlich gesteigert.

Zur Befestigung des Heizkörpers 106 vor dem Trägerkörper 104 ist eine Mehrzahl von oben bzw. unten beschriebenen Stützstiften 2 vorgesehen, von denen der Übersichtlichkeit halber nur drei Stützstifte dargestellt sind. Die jeweilige Außenhülse ist dabei an der Heizscheibe befestigt, insbesondere in sie zumindest teilweise eingesteckt und verlötet. Der jeweilige Stiftkörper 10 ist an dem Trägerkörper 104 befestigt, insbesondere in ihn zumindest teilweise eingesteckt und verlötet.

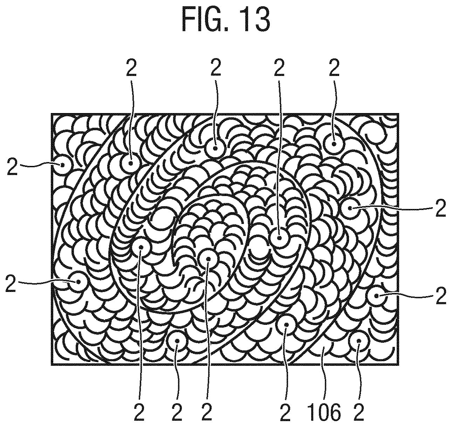

In FIG. 13 ist eine Draufsicht auf eine Heizscheibe 106 dargestellt mit einer Heizleiterabstützung durch eine Vielzahl von Stützstiften 2. An die Heizscheibe 106 sind die Außenhülsen 6 der Stützstifte 2 angelötet.

In FIG. 14 ist ein Stützstift 2 in einer erfindungsgemässen Ausführungsform dargestellt mit einem Stiftkörper 10 und zwei Innenhülsen 14a, 14b. Der Stiftkörper 10 weist einen Verdickungsbereich 120 auf, dessen Radius bzw. Querschnitt größer ist als der Radius bzw. Querschnitt einer Innenhülse 14b, die zwischen Verdickungsbereich 120 und Endbereich 48 der Außenhülse angeordnet ist. Der Verdickungsbereich 120 ist im vorliegenden Ausführungsbeispiel über eine axiale Länge I mit gleichem Radius ausgeführt. Vorteilhafterweise wird der Stiftkörper 10 aus einem Bauteil mit einem Durchmesser, der gleichgroß oder größer ist als der größte vorkommende Durchmesser des Stiftkörpers 10 herausgedreht. Beim Herausdrehen wird der dabei zur Erstellung des Verdickungsbereiches 120 der Radius entsprechend groß gehalten. Der Stiftkörper 10 ist auf diese Weise einstückig gefertigt. Zwischen Verdickungsbereich 120 und Innenseite der Außenhülse 6 ist radial gesehen ein ring- bzw. hülsenartiger Luftspalt 124 bzw. Bereich realisiert. Die radiale Ausdehnung des Luftspaltes ist derart dimensioniert, dass bei den im Betrieb vorkommenden Spannungen keine Funkenentladung stattfinden kann.

In einer weiteren erfindungsgemässen (nicht dargestellten) Ausführungsform ist der Stützstift 2 gefertigt wie in FIG. 14, weist aber nicht die Innenhülse 14a auf, die benachbart zum geschlossenen Ende 20 der Außenhülse angeordnet ist. Der Verdickungsbereich 120 ist hier gewissermaßen ein Kragen 30 (siehe FIG. 1). In FIG. 15 ist eine weitere bevorzugte Ausführungsform einer Stützstiftes 2 dargestellt. Diese Ausführungsform unterscheidet sich von der Ausführungsform gemäß FIG. 14 dadurch, dass der Luftspalt 124 aufgefüllt ist mit einem Klebestoff 126. Der Klebestoff verklebt dabei den Stiftkörper 10 mit der Außenhülse 6. Dadurch wird eine Verdrehung des Stiftkörpers 10 in Bezug auf die Außenhülse 6 verhindert.

Durch das Einfüllen des Klebstoffes in den Spalt 124 wird bevorzugt auch eine Verklebung von Stiftkörper 10 mit Innenhülsen 14a, 14b bzw. Innenhülsen 14a, 14b mit Außenhülse 6 erzielt, d. h. der Klebstoff wird bevorzugt so eingebracht, dass auch eine Verklebung dieser Teile jeweils erzielt wird, wodurch die Verdrehsicherung noch verstärkt wird.

Dadurch wird verhindert, dass durch Vibrationen des Katalysators sich der Heizkörper lockert und seine Heizfunktion nur noch unzureichend ausführen kann. Darüber hinaus werden Beschädigungen von Katalysator und/oder Heizscheibe vermieden.

Weitere bevorzugte Ausführungen eines Stützstiftes 2 entsprechen den in den FIG. 1-13 dargestellten Ausführungen, wobei jeweils in einem ring- bzw. hülsenförmigen Bereich zwischen Außenhülse 6 und Stiftkörper 10 Klebstoff eingebracht ist, sodass Stiftkörper 10 und Außenhülse 6 zumindest bereichsweise miteinander verklebt sind.

Der verwendete Klebstoff hat bevorzugt folgende Eigenschaften:
Maximale Temperatur: 1650 °C
pH-Wert: 10,7/11,0
Spez. Gewicht g/cm³: 1,41 / 1,26
Viskosität mPA s: 370 / 60
Festkörpergewicht: 40 / 30

Als Klebstoff wird bevorzugt eine Basissolution verwendet. Als Klebstoffe bzw. Basissolutionen eignen sich insbesondere "Ceramabind 643" oder "Ceramabind 642", die von der Firma Kager GmbH Industrieprodukte angeboten werden. Der Klebstoff wird auf den Stiftkörper 10 im Verdickungsbereich aufgetragen bzw. bei in der Außenhülse 6 eingesetztem Stiftkörper 10 wird der Klebstoff in den ringförmigen Spalt zwischen Stiftkörper 10 und Außenhülse 6 eingebracht. Dann erfolgt eine Lufttrocknung für bevorzugt mindestens eine Stunde. Anschließend folgen eine wenigstens eine Wärmeaushärtung und/oder Endaushärtung, wobei bevorzugt Temperaturen ab 95 °C verwendet werden.

Der Klebstoff wird alternativ bevorzugt folgendermaßen hergestellt: Ein Pulver aus Al₂O₃ wird in eine Basissolution, die hochkompatibel mit dem Pulver ist, gemischt, bis eine gleichbleibende Viskosität erreicht ist. Es wird langsam gemischt, um Luftblasen zu reduzieren. Dabei wird ein Mischungsverhältnis Binder: Pulver zwischen 4:1 und 1: 1 (Gewichtsanteile) verwendet.

Die Mischung wird nun auf den Stiftkörper 10 im Verdickungsbereich aufgetragen bzw. bei in der Außenhülse eingesetztem Stiftkörper 10 wird die Mischung in den ringförmigen Spalt zwischen Stiftkörper 10 und Außenhülse 6 eingebracht. Dann erfolgt eine Lufttrocknung für bevorzugt mindestens eine Stunde. Anschließend folgen eine wenigstens eine Wärmeaushärtung und/oder Endaushärtung, wobei bevorzugt Temperaturen ab 95 °C verwendet werden.

Als Klebstoffe bzw. Basissolutionen eignen sich insbesondere "Ceramabind 643" oder "Ceramabind 642", die von der Firma Kager GmbH Industrieprodukte angeboten werden.

Eine weitere denkbare Variante wäre, dass ein oder mehrere Element/e gefertigt aus Aluminiumoxid (Al₂O₃), wobei die Form hierbei eine nebensächliche Rolle spielt, zwischen dem Heizkörper 106 und dem Trägerkörper 104 eines Katalysators mittels Klebverfahren (bevorzugt "Ceramabind 642" oder "Ceramabind 643") angebracht wird/werden. Diese aus Aluminiumoxid gefertigten Teile dienen als Abstandshalter zwischen Heizkörper 106 und Trägerkörper 104 und soll diese beiden Elemente elektrisch voneinander trennen. Die Erfindung betrifft somit auch eine Anordnung von einem Heizkörper 106 und einem Trägerkörper 104, die mittels wenigstens eines Abstandelementes aus Aluminiumoxid (Al₂O₃) beabstandet sind, wobei das jeweilige Abstandselement an einem Ende mit dem Heizkörper 106 und an einem andere Ende mit dem Trägerkörper 104 verklebt ist, wobei bevorzugt der oben genannte Klebstoff verwendet wird. Bevorzugt ist das Abstandselement als Stift ausgebildet.

## Patentansprüche

1. Stützstift (2) zur Abstützung eines elektrisch beheizbaren Heizkörpers (106) an einem Trägerkörper (104) eines Katalysators (100), wobei der Stützstift (2) eine Außenhülse (6) und einen darin einsetzbaren Stiftkörper (10) umfasst, wobei innerhalb der Außenhülse (6) der Stiftkörper (10) zumindest bereichsweise von wenigstens einer Innenhülse (14) umgeben ist, welche aus elektrisch nicht-leitfähigem Material besteht,
**dadurch gekennzeichnet, dass**
der Stiftkörper (10), einen Verdickungsbereich (120) aufweist, in dem der Stiftkörper (10) einen Querschnitt aufweist, der größer ist als ein Innenquerschnitt der Innenhülse (14), wobei die Innenhülse (14) in axialer Richtung zwischen diesem Verdickungsbereich (120) und einem Ende (22) der Außenhülse (6), an dem der Stiftkörper (10) aus der Außenhülse (6) herausragt, angeordnet ist.

2. Stützstift (2) nach Anspruch 1, wobei das Material der Innenhülse (14) hitzebeständig und/oder säurebeständig ist.

3. Stützstift (2) nach Anspruch 2, wobei das Material der Innenhülse (14) ein Keramik-Werkstoff, insbesondere Aluminiumoxid, ist.

4. Stützstift (2) nach einem der Ansprüche 1 bis 3, wobei die Außenhülse (6) ein offenes (22) und ein geschlossenes Ende aufweist, und wobei der Stiftkörper (10) axial am offenen Ende (22) aus der Außenhülse (6) hinausragt.

5. Stützstift (2) nach einem der Ansprüche 1 bis 4, wobei die Außenhülse (6) ein erstes offenes Ende (20) aufweist und ein zweites offenes Ende (22) aufweist, wobei der Stiftkörper (10) axial am zweiten offenen Ende (22) aus der Außenhülse (6) herausragt.

6. Stützstift (2) nach Anspruch 4 oder 5, wobei die Außenhülse (6) am offenen Ende (22), an dem der Stiftkörper (10) aus der Außenhülse (6) hinausragt, einen ringförmigen Endbereich (48) aufweist, der die Innenhülse (14) in axialer Richtung blockiert.

7. Stützstift (2) nach Anspruch 6, wobei in axialer Richtung zwischen dem ersten offenen Ende (20) der Außenhülse (6) und dem Stiftkörper (10) ein Isolierelement (40) aus elektrisch nicht leitfähigem Material angeordnet ist.

8. Stützstift (2) nach Anspruch 7, wobei zwischen einem ersten offenen Ende (20) der Außenhülse (6) und dem Isolierelement (40) in axialer Richtung ein Schutzelement (52), insbesondere aus elektrisch leitendem Material, angeordnet ist.

9. Stützstift (2) nach einem der Ansprüche 1 bis 8, wobei zwischen dem Verdickungsbereich (120) und der Innenseite der Außenhülse (6) ein Klebstoff (126) angebracht ist, der die Außenhülse (6) und den Stiftkörper (10) miteinander verklebt.

10. Stützstift (2) nach einem der vorherigen Ansprüche, wobei der Stiftkörper (10) an seinem der Innenseite der Außenhülse (6) zugewandten Ende einen radial vergrößerten Bereich, insbesondere einen Kragen/Sockel (30), aufweist.

11. Stützstift (2) nach einem der vorherigen Ansprüche, wobei zwei voneinander beabstandete Innenhülsen (14a, 14b) vorgesehen sind.

12. Stützstift (2) nach einem der vorherigen Ansprüche, wobei der Verdickungsbereich (120) zwischen den beiden Innenhülsen (14a, 14b) angeordnet ist.

13. Stützstift (2) nach Anspruch 11 oder 12, wobei der Stiftkörper (10) in axialer Richtung zwischen den beiden Innenhülsen (14a, 14b) zumindest bereichsweise eine Rändelung aufweist.

14. Stützstift (2) nach Anspruch 13, wobei jeweils axial in dem Bereich zwischen einer Innenhülse (14a, 14b) und der Rändelung jeweils ein Ring (76, 78) angeordnet ist.

15. Katalysator (100), umfassend einen Trägerkörper (104) und einen stirnseitig am Trägerkörper (104) angeordneten Heizkörper (106), wobei eine Mehrzahl von Stützstiften (2) nach einem der vorherigen Ansprüche vorgesehen ist, die jeweils mit der Außenhülse (6) am Heizkörper (106) und mit dem Stiftkörper (10) am Trägerkörper (104) befestigt sind, wodurch der Heizkörper (106) beabstandet vor dem Trägerkörper (104) gehalten wird.

## Claims

1. A support pin (2) for supporting an electrically heatable heating body (106) on a support body (104) of a catalytic converter (100), the support pin (2) comprising an outer sleeve (6) and a pin body (10) insertable therein, the pin body (10) being surrounded inside the outer sleeve (6) at least in some regions by at least one inner sleeve (14) which consists of electrically non-conductive material,
**characterised in that**
the pin body (10) has a thickened region (120), in which the pin body (10) has a cross section that is larger than an inner cross section of the inner sleeve (14), the inner sleeve (14) being arranged in the axial direction between this thickened region (120) and an end (22) of the outer sleeve (6) where the pin body (10) protrudes out from the outer sleeve (6).

2. The support pin (2) according to claim 1, wherein the material of the inner sleeve (14) is heat-resistant and/or acid-resistant.

3. The support pin (2) according to claim 2, wherein the material of the inner sleeve (14) is a ceramic material, in particular aluminium oxide.

4. The support pin (2) according to one of claims 1 to 3, wherein the outer sleeve (6) has an open end (22) and a closed end, and wherein the pin body (10) protrudes out from the outer sleeve (6) axially at the open end (22).

5. The support pin (2) according to one of claims 1 to 4, wherein the outer sleeve (6) has a first open end (20) and has a second open end (22), wherein the pin body (10) protrudes out from the outer sleeve (6) axially at the second open end (22).

6. The support pin (2) according to claim 4 or 5, wherein the outer sleeve (6) has an annular end region (48) at the open end (22) where the pin body (10) protrudes out from the outer sleeve (6), which annular end region blocks the inner sleeve (14) in the axial direction.

7. The support pin (2) according to claim 6, wherein an insulation element (40) made of electrically non-conductive material is arranged in the axial direction between the first open end (20) of the outer sleeve (6) and the pin body (10).

8. The support pin (2) according to claim 7, wherein a protection element (52), in particular made of electrically conductive material, is arranged in the axial direction between a first open end (20) of the outer sleeve (6) and the insulation element (40).

9. The support pin (2) according to one of claims 1 to 8, wherein an adhesive (126) is applied between the thickened region (120) and the inner side of the outer sleeve (6) and glues the outer sleeve (6) and the pin body (10) to one another.

10. The support pin (2) according to one of the preceding claims, wherein the pin body (10) has a radially enlarged region, in particular a collar/base (30) at its end facing the inner side of the outer sleeve (6).

11. The support pin (2) according to one of the preceding claims, wherein two inner sleeves (14a, 14b) distanced from one another are provided.

12. The support pin (2) according to one of the preceding claims, wherein the thickened region (120) is arranged between the two inner sleeves (14a, 14b).

13. The support pin (2) according to claim 11 or 12, wherein the pin body (10) has a knurling, at least in some regions, in the axial direction between the two inner sleeves (14a, 14b).

14. The support pin (2) according to claim 13, wherein a ring (76, 78) is arranged axially in the region between each inner sleeve (14a, 14b) and the knurling.

15. A catalytic converter (100), comprising a support body (104) and a heating body (106), which is arranged at an end face of the support body (104), wherein a plurality of support pins (2) according to one of the preceding claims is provided, which are each fastened by the outer sleeve (6) to the heating body (106) and by the pin body (10) to the support body (104), whereby the heating body (106) is held at a distance in front of the support body (104).

## Revendications

1. Broche d'appui (2) destinée à supporter un corps de chauffe (106) pouvant être chauffé électriquement, sur un corps de support (104) d'un catalyseur (100), dans lequel la broche d'appui (2) comprend un manchon extérieur (6) et un corps de broche (10) pouvant être inséré à l'intérieur, dans lequel à l'intérieur de l'enveloppe extérieure (6), le corps de broche (10) est entouré au moins par tronçons par au moins un manchon intérieur (14), lequel est constitué d'un matériau non-conducteur électrique,
**caractérisée en ce que**
le corps de broche (10) présente une zone d'épaississement (120) dans laquelle le corps de broche (10) présente une section transversale qui est plus grande qu'une section transversale intérieure du manchon intérieur (14), dans laquelle le manchon intérieur (14) est disposé dans le sens axial entre cette zone d'épaississement (120) et une extrémité (22) du manchon extérieur (6) sur laquelle le corps de broche (10) fait saillie hors du manchon extérieur (6).

2. Broche d'appui (2) selon la revendication 1, dans laquelle le matériau du manchon intérieur (14) est résistant à la chaleur et/ou aux acides.

3. Broche d'appui (2) selon la revendication 2, dans laquelle le matériau du manchon intérieur (14) est un matériau céramique, en particulier de l'oxyde d'aluminium.

4. Broche d'appui (2) selon l'une des revendications 1 à 3, dans laquelle le manchon extérieur (6) présente une extrémité ouverte (22) et une extrémité fermée et dans laquelle le corps de broche (10) fait saillie axialement du manchon extérieur (6) sur l'extrémité ouverte (22).

5. Broche d'appui (2) selon l'une des revendications 1 à 4, dans laquelle le manchon extérieur (6) présente une première extrémité ouverte (20) et une seconde extrémité ouverte (22), dans laquelle le corps de broche (10) fait saillie axialement du manchon extérieur (6) sur la seconde extrémité ouverte (22).

6. Broche d'appui (2) selon la revendication 4 ou 5, dans laquelle le manchon extérieur (6) présente sur l'extrémité ouverte (22), sur laquelle le corps de broche (10) fait saillie du manchon extérieur (6), une partie d'extrémité annulaire (48) qui bloque le manchon intérieur (14) en direction axiale.

7. Broche d'appui (2) selon la revendication 6, dans laquelle un élément isolant (40) en matériau non conducteur électrique est disposé, dans le sens axial, entre la première extrémité ouverte (20) du manchon extérieur (6) et le corps de broche (10).

8. Broche d'appui (2) selon la revendication 7, dans laquelle un élément de protection (52), en particulier en matériau conducteur électrique, est disposé dans le sens axial, entre une première extrémité ouverte (20) du manchon extérieur (6) et l'élément isolant (40).

9. Broche d'appui (2) selon l'une des revendications 1 à 8, dans laquelle entre la zone d'épaississement (120) et la face intérieure du manchon extérieur (6) est disposé un adhésif (126) qui colle entre eux le manchon extérieur (6) et le corps de broche (10).

10. Broche d'appui (2) selon l'une des revendications précédentes, dans laquelle le corps de broche (10) présente sur son extrémité tournée vers la face intérieure du manchon extérieur (6), une zone agrandie radialement, en particulier une collerette/embase (30).

11. Broche d'appui (2) selon l'une des revendications précédentes, dans laquelle deux manchons intérieurs distants l'un de l'autre (14a, 14b) sont prévus.

12. Broche d'appui (2) selon l'une des revendications précédentes, dans laquelle la zone d'épaississement (120) est disposée entre les deux manchons intérieurs (14a, 14b).

13. Broche d'appui (2) selon la revendication 11 ou 12, dans laquelle le corps de broche (10) présente un moletage au moins par tronçons, dans le sens axial entre les deux manchons intérieurs (14a, 14b).

14. Broche d'appui (2) selon la revendication 13, dans laquelle une bague (76, 78) est disposée respectivement axialement dans la zone entre un manchon intérieur (14a, 14b) et le moletage.

15. Catalyseur (100), comprenant un corps de support (104) et un corps de chauffe (106) disposé sur l'avant du corps de support (104), dans lequel une pluralité de broches d'appui (2) selon l'une des revendications précédentes est prévue, qui sont fixées respectivement au manchon extérieur (6) sur le corps de chauffe (106) et au corps de broche (10) sur le corps de support (104), ce par quoi le corps de chauffe (106) est maintenu à distance devant le corps de support (104).
